# EUROPEAN PATENT SPECIFICATION

(11) **EP 3 066 568 B1**
(45) Date of publication and mention of the grant of the patent: **11.09.2019**
(21) Application number: 14816457.7
(22) Date of filing: 08.10.2014
(51) Int. Cl.: G06F 9/50

(54) **SYSTEM AND METHOD FOR SUPPORTING EFFICIENT PACKET PROCESSING MODEL AND OPTIMIZED BUFFER UTILIZATION FOR PACKET PROCESSING IN A NETWORK ENVIRONMENT**
SYSTEM UND VERFAHREN ZUR UNTERSTÜTZUNG EINES EFFIZIENTEN PAKETVERARBEITUNGSMODELLS UND ZUR OPTIMIERTEN PUFFERSPEICHERVERWENDUNG ZUR PAKETVERARBEITUNG IN EINER NETZWERKUMGEBUNG
SYSTÈME ET PROCÉDÉ DE PRISE EN CHARGE D'UN MODÈLE DE TRAITEMENT DE PAQUETS EFFICACE ET UTILISATION DE MÉMOIRES TAMPONS OPTIMISÉE POUR LE TRAITEMENT DE PAQUETS DANS UN ENVIRONNEMENT DE RÉSEAU

(30) Priority: 05.11.2013 US 201314072566; 05.11.2013 US 201314072597
(43) Date of publication of application: 14.09.2016
(73) Proprietor: Oracle International Corporation, Redwood Shores, CA 94065 (US)
(72) Inventor: SRINIVASAN, Arvind, San Jose, California 95129 (US); SIDDABATHUNI, Ajoy, Santa Clara, California 95054 (US); RODRIGUES, Elisa, Union City, California 94587 (US)
(74) Representative: D Young & Co LLP
(86) International application number: PCT/US2014/059749
(87) International publication number: WO 2015/069408

(56) References cited:
- GB-A- 2 367 728
- US-A- 6 058 460
- US-A1- 2007 288 720
- US-A1- 2011 161 619
- US-A1- 2012 207 158
- US-A1- 2012 246 448
- US-A1- 2013 268 700
- US-B2- 7 761 617

## Description

### Field of Invention:

The present invention is generally related to computer systems, and is particularly related to an engineered system for middleware and application execution.

### Background:

As larger cloud computing architectures are introduced, the performance and administrative bottlenecks associated with the traditional network and storage have become a significant problem. An engineered system, such as the Oracle engineered system, can provide excellent processing speeds, significantly faster deployments, instant visuals for in-depth analysis, and manageable big data capability. This is the general area that embodiments of the invention are intended to address. US 2013/0268700 discloses a system for fetching control instructions for a direct memory access (DMA) engine shared between a plurality of threads. US 2007/0288720 discloses a technique for relocating the contents of kernel pages in a manner similar to techniques used for relocating the contents of user pages.

### Summary:

The invention is defined by the appended claims. Described herein are systems and methods that can support efficient packet processing in a network environment. The system can comprise a thread scheduling engine that operates to assign a thread key to each software thread in a plurality of software threads. Furthermore, the system can comprise a pool of direct memory access (DMA) resources that can be used to process packets in the network environment. Additionally, each said software thread operates to request access to a DMA resource in the pool of DMA resources by presenting an assigned thread key, and a single software thread is allowed to access multiple DMA resources using the same thread key.

Described herein are systems and methods that can support efficient packet processing in a network environment. The system can comprise a direct memory access (DMA) resources pool that comprises one or more of DMA resources. Furthermore, the system can use a plurality of packet buffers in a memory, wherein each said DMA resource can point to a chain of packet buffers in the memory. Here, the chain of packet buffers can be implemented based on either a linked list data structure and/or a linear array data structure. Additionally, each said DMA resource allows a packet processing thread to access the chain of packet buffers using a pre-assigned thread key.

### Brief Description of the Figures:

**Figure 1** shows an illustration of supporting a high performance networking device in a network environment, in accordance with an embodiment of the invention.
**Figure 2** shows an illustration of supporting an efficient packet processing model in a networking device, in accordance with an embodiment of the invention.
**Figure 3** shows an illustration of supporting a packet processing model in a networking device, in accordance with an embodiment of the invention.
**Figure 4** illustrates an exemplary flow chart for supporting efficient packet processing in a network environment, in accordance with an embodiment of the invention.
**Figure 5** shows an illustration of supporting efficient buffer utilization for packet processing in a networking device, in accordance with an embodiment of the invention.
**Figure 6** shows an illustration of using buffer chains for packet processing in a networking device, in accordance with an embodiment of the invention.
**Figure 7** shows an illustration of using one or more linked lists of buffers for packet processing in a networking device, in accordance with an embodiment of the invention.
**Figure 8** shows an illustration of using one or more linear arrays for supporting packet processing in a networking device, in accordance with an embodiment of the invention.
**Figure 9** shows an illustration of using a mix of linked lists and linear arrays to support flexible packet processing in a networking device, in accordance with an embodiment of the invention.
**Figure 10** illustrates an exemplary flow chart for supporting efficient buffer utilization for packet processing in a networking device, in accordance with an embodiment of the invention.

### Detailed Description:

The invention is illustrated, by way of example and not by way of limitation, in the figures of the accompanying drawings in which like references indicate similar elements. It should be noted that references to "an" or "one" or "some" embodiment(s) in this disclosure are not necessarily to the same embodiment, and such references mean at least one.

The description of the invention as following uses the InfiniBand (IB) network switch as an example for a high performance networking device. It will be apparent to those skilled in the art that other types of high performance networking devices can be used without limitation.

Described herein are systems and methods that can support multi-threaded direct memory access (DMA) processing in a network environment. In accordance with an embodiment of the invention, the system allows the DMA processing to be flexible and with low memory footprint.

### High Performance Networking Device

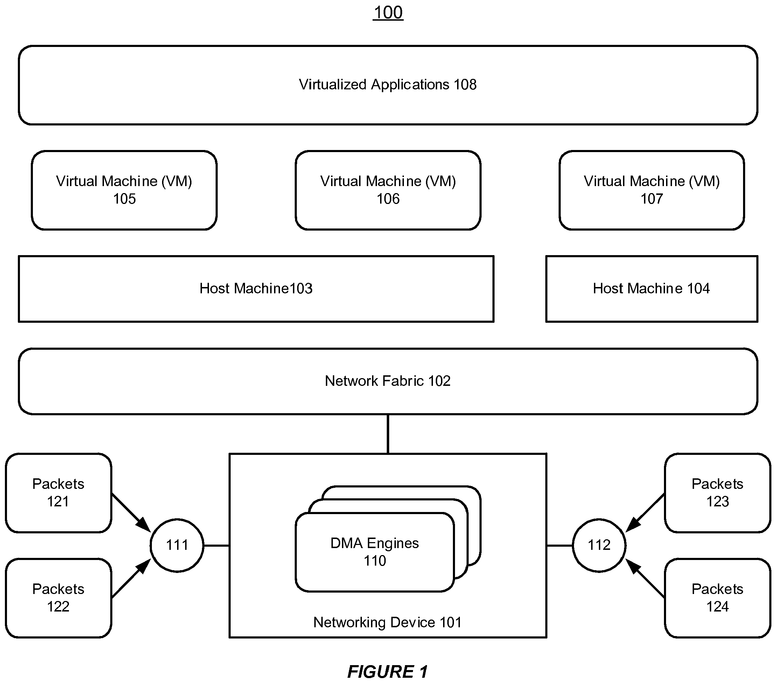

**Figure 1** shows an illustration of supporting a high performance networking device in a network environment, in accordance with an embodiment of the invention. As shown in Figure 1, a high performance networking device 101, such as a network switch, can be used in a network fabric 102 to direct packet flows in a network environment 100.

In accordance with an embodiment of the invention, embedded processors, e.g. DMA engines 110, can be used in the networking device 101 for processing packets, such as the packets 121-124 (e.g. including both control packets and data packets). Here, the transmission and reception of these packets 121-124 can occur at the network ports 111-112 of the networking device 101.

As shown in Figure 1, the networking device 101 can support a virtualized fabric. The system allows virtualized applications 108 to run on one or more virtual machines (VMs) 105-107 that are supported using one or more host machines 103-104.

Furthermore, when a networking device 101 supports a virtualized fabric, the throughput requirements for processing the control packets 121-124 may vary accordingly to the requirement of the different virtualized applications 108. As shown in Figure 1, the network fabric 102 can use the networking device 101 to direct multiple packet streams from various hosts 103-104 / VMs 105-107.

In order to support the virtualized applications 108, these different control packet streams, from various VMs 105-107, can be mapped to hardware resources in the networking device 101 for packet processing. In accordance with an embodiment of the invention, the embedded processors, such as the DMA engines 110, can perform different types of packet processing and can run a large number of software threads (or work queues).

Unlike the DMA engines that run on traditional network interface cards (NICs), which can have substantial CPU capability and system memory, the embedded systems may have limited CPU capability and system memory. Thus, mapping software threads to the hardware resources in the embedded systems may incur significant software performance penalties. For example, these performance penalties can appear in the form of software thread locking overheads, packet buffer management, and other forms, which can further reduce the available CPU capability.

In accordance with an embodiment of the invention, the system can provide a framework for supporting an efficient packet processing model in the network environment 100. This framework can map a large number of software threads to a limited set of hardware DMA processing threads without locking and thread contentions. Additionally, the system can optimize the buffer utilization for packet processing in the networking device 101.

### Packet Processing Model

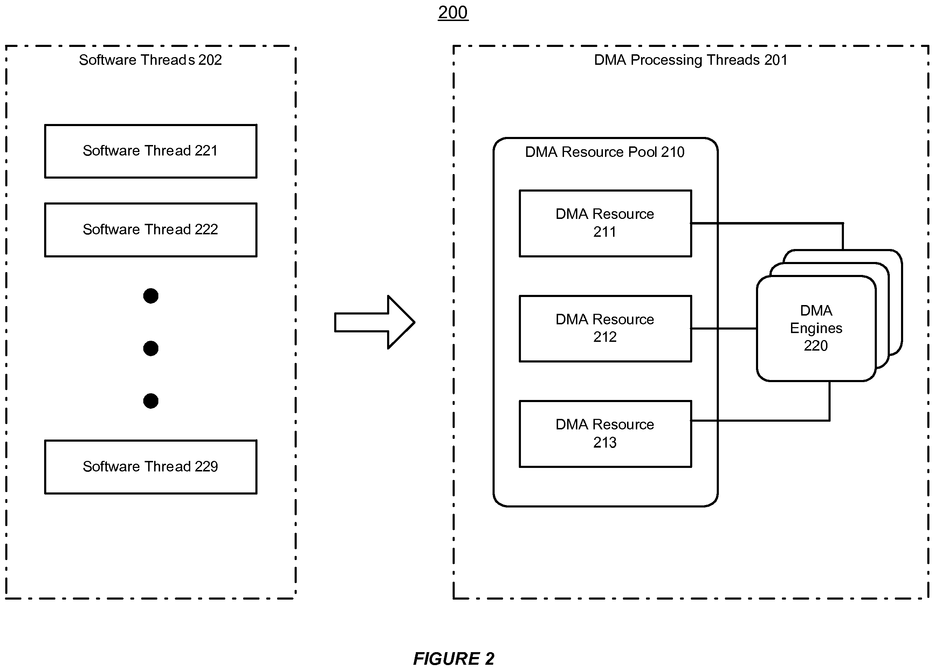

**Figure 2** shows an illustration of supporting efficient packet processing in a networking device, in accordance with an embodiment of the invention. As shown in Figure 2, the hardware can provide a free DMA resources pool 210, which contains one or more DMA resources 211-213.

In accordance with an embodiment of the invention, the DMA resources 211-213 can represent DMA descriptors, buffer management and DMA engines used for data movement. For example, the DMA resources 211-213 can be tied to one or more DMA engines 220 that represent the physical medium, on which packet transfers can occur.

As shown in Figure 2, the system can provide an efficient packet processing model 200, which can map a large number of software threads 202 to a limited set of hardware DMA processing threads 201. The DMA resources 211-213 can be allocated, on-demand, for various software threads 221-229 as needed. Also, the DMA resources 211-213 can be dynamically relinquished by the software threads 221-229.

For example, the DMA resources 211-213 can be assigned according to the data rate that each DMA Engine can sustain. Here, the assignment of the DMA resources 211-213 may not depend on the number of software threads working on a given DMA engine. This is because the traffic processing may be spread among multiple software threads, and each of these software threads may be active only for the duration of the work processing time.

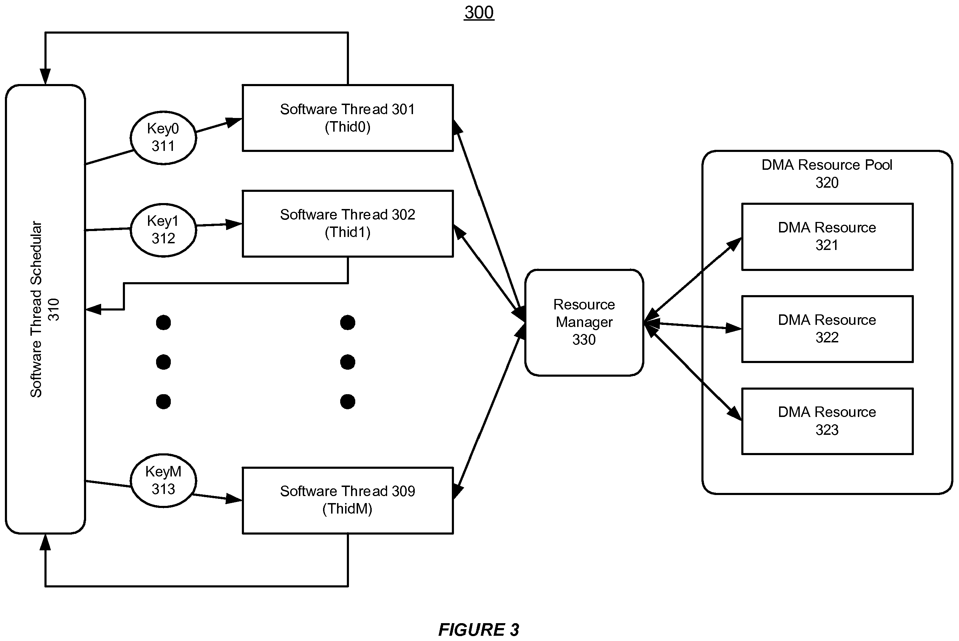

**Figure 3** shows an illustration of supporting an efficient packet processing model in a networking device, in accordance with an embodiment of the invention. As shown in Figure 3, a thread scheduling engine, such as a thread scheduler 310, can be used to assign a different thread key (e.g. keyO 311 to key9 319) to each of the software threads 301-309 in a networking device 300. Here, the thread scheduler 310 can be built based on a standard real time O/S or a customized O/S.

In accordance with an embodiment of the invention, when a software thread requires performing network data transfer, the software thread can request for accessing a DMA resource by presenting the DMA resource with the assigned thread key. As shown in Figure 3, each software threads 301-309 can present a thread key to a resource manager 330, which is used to allocate DMA resources for the different software threads 301-309.

For example, the software thread 301 with a thread ID Thid0 can use the assigned thread key, keyO 311, to allocate a DMA resource from the DMA resource pool 320. Also, the software thread 302 with a thread ID Thid1 can use the assigned thread key, key1 312, to allocate a DMA resource from the DMA resource pool 320. Likewise, the software thread 309 with a thread ID Thid9 can use the assigned thread key, key9 319, to allocate a DMA resource from the DMA resource pool 320.

If any DMA resource in the DMA resource pool 320 is free, the available DMA resource can be assigned to the requesting software thread. For example, the assigned DMA resource can be mapped to the assigned thread key associated with the requesting software thread. On the other hand, if the DMA resource has already been assigned to another software thread, the requesting software thread may be prevented (or denied) from accessing the DMA resource. Additionally, the system can set the appropriate status for the requesting software thread. Furthermore, if all the DMA resources are in use, then the requesting software thread may have to wait until a DMA resource in the DMA resource pool 320 is free.

In accordance with an embodiment of the invention, using the assigned thread key, the requesting software thread can further configure the DMA resource as it needs, after the resource has been assigned to the software thread. For example, the requesting software thread can set the descriptor properties (e.g. using a linked list instead of a ring structure).

Additionally, a single software thread can make a request for multiple DMA resources if needed. The system can assign multiple DMA resources 321-323 available in the free pool 320 to the requesting software thread based on the same assigned thread key. Furthermore, the software thread can decide whether it wants to maintain ordering between the multiple assigned resources once these DMA resources 321-323 are assigned. For example, the software thread can provide a dependency list to the hardware if ordering is required.

In accordance with an embodiment of the invention, the system allows multiple threads to concurrently access the DMA resources 321-323 (including the packet buffers). By allowing each thread to have a different thread key, the system can send and receive packets from the network fabric without a need for implementing mutex locks or semaphores.

In accordance with an embodiment of the invention, the thread key space can be configured to include a large number of entries in order to support a large number of possible software threads. Thus, the system can map a large number of software threads to a limited set of hardware resources.

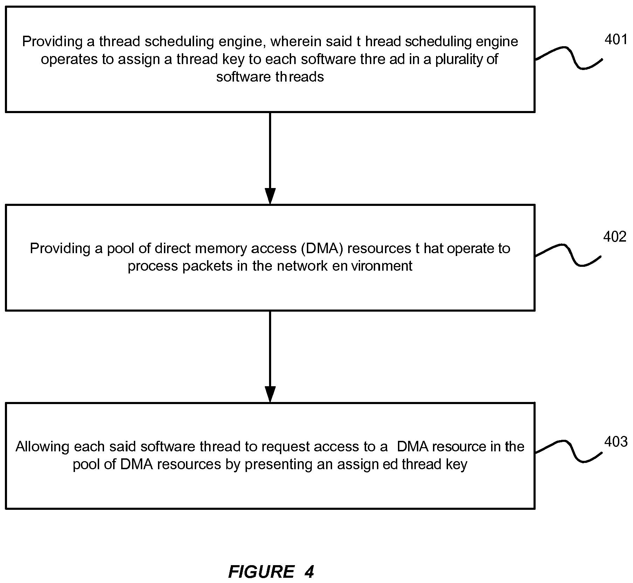

**Figure 4** illustrates an exemplary flow chart for supporting efficient packet processing in a network environment, in accordance with an embodiment of the invention. As shown in Figure 4, at step 401, the system can provide a thread scheduling engine, wherein said thread scheduling engine operates to assign a thread key to each software thread in a plurality of software threads. Furthermore, at step 402, the system can provide a pool of direct memory access (DMA) resources that operate to process packets in the network environment. Then, at step 403, each said software thread operates to request access to a DMA resource in the pool of DMA resources by presenting an assigned thread key.

### Efficient Buffer Utilization for Packet Processing

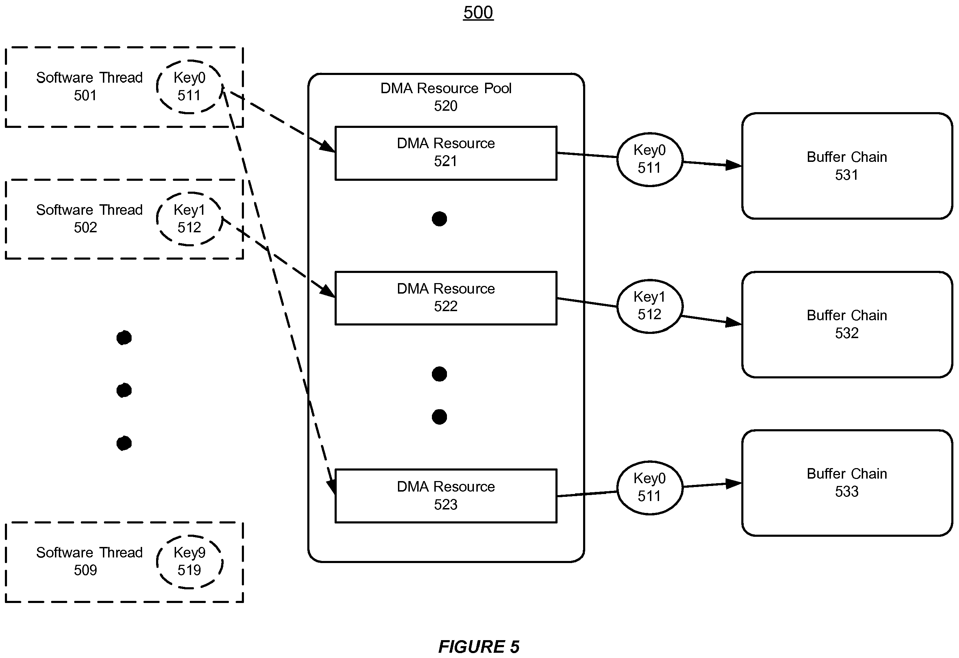

**Figure 5** shows an illustration of supporting efficient buffer utilization for packet processing in a networking device, in accordance with an embodiment of the invention. As shown in Figure 5, the DMA resources 521-523 in a DMA resource pool 520 can be associated with one or more buffer chains 531-533, each of which can contain various number of packet buffers in a networking device 500.

In accordance with an embodiment of the invention, when a DMA resource is initialized, the DMA resource can point to an empty container, which can be used for containing packet buffers. Furthermore, the buffer chains 531-533 in the memory, where various packet buffers are placed, can be in the form of either a linked list or a linear array. Unlike a fixed ring structure, the size of a buffer chain 531-533 can grow (subject to memory limits). Additionally, using the buffer chains 531-533, the system allows for multi-threaded access to the queuing structures.

As shown in Figure 5, the software threads 501-509 can make a request for accessing the packet buffers in the buffer chains 531-533, by presenting the pre-assigned thread keys (such as keyO 511 to key9 519). For example, the software thread 501 can access the packet buffers in the buffer chain 531, using a pre-assigned thread key, keyO 501. Also, the software thread 502, can access the packet buffers in the buffer chain 532, using a pre-assigned thread key, key1 512.

Furthermore, if a packet processing software thread needs to process more than one set of buffer chains (e.g. in the case of scheduling a second set of packet processing queues before the first set of packet processing queues are done), the requesting software thread can obtain and use another DMA resource out of the same hardware DMA resource pool 520. As shown in Figure 5, the software thread 501 can request to access the packet buffers in the buffer chain 533, using the same pre-assigned thread key, keyO 501.

Additionally, if ordering is required among multiple packet processing processes, the system can set a resource dependency number as part of the configuration. The hardware processors can serialize the packet processing if the dependency list is set. Otherwise, the system may process the packets in an arbitrary manner.

Furthermore, if a particular task requires potentially parallel processing by hardware threads and also requires the results to be sent out in order, then the system can dispatch the tasks to the DMA engines that have the dependency attribute set. Thus, the system can pipeline the work and can make use of idle CPU time if it is available, in conjunction with allocating the DMA resources on demand.

In accordance with an embodiment of the invention, since each software thread 501-509 is pre-assigned with a thread key (such as keyO 511 to key9 519), the system can set up multiple threads to concurrent access the packet buffers in the different buffer chains 531-533, without a need for implementing mutex locks or semaphores. This can be true for both sending and receiving packets from the network fabric. Also, the above scheme allows for packets to be pipelined in batches to the hardware either serially, or in parallel, when independent flows are being transmitted.

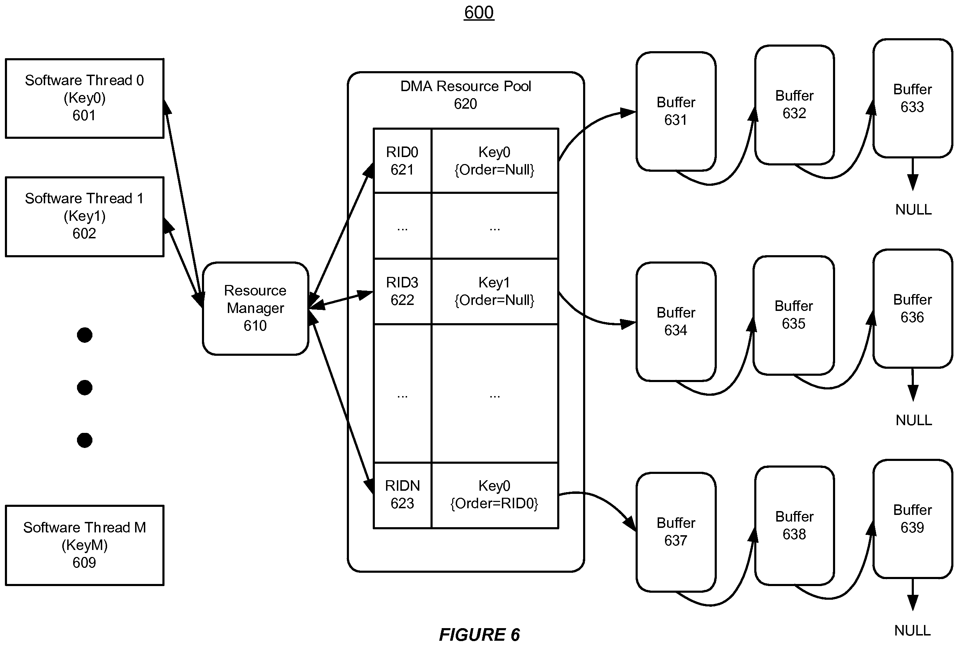

**Figure 6** shows an illustration of using buffer chains for packet processing in a networking device, in accordance with an embodiment of the invention. As shown in Figure 6, a resource manager 610 can be used to map a plurality of software threads 601-609 to different DMA resoruces in the free pool 620 in a networking device 600.

Each of the DMA resource in the free pool 620 can be associated with a resource ID, such as RID0 621, RID3 622, and RIDN 623. Furthermore, each DMA resource can maintain a thread key, which can be used to access the different buffer chains, and/or a thread ID, which can be used to assign and manage the different buffer chains.

For example, the software thread 0 601 (with a thread key key0) can present the thread key (keyO) to the resource manager 610 in order to request for allocating a DMA resource. The resource manager 610, in turn, can provide the thread key (key0) to an available DMA resource, e.g. RID0 621. Furthermore, if the thread 601 needs more hardware resources, the resource manager 610 can provide the thread key (key0) to another available DMA resource, e.g. RIDN 623.

Then, the resource manager 610 can provide the status of the DMA resources and all related resource numbers (e.g. RID0 621 and RIDN 623) back to the software thread 601. Thus, the software thread 0 601 can have access to both chain of buffers 631-633 and 637-639, and can deallocate the related DMA resources after finishing packet processing.

Similarly, the software thread 1 602 (with a thread key key1) can present the thread key (key1) to the resource manager 610 in order to request for allocating a DMA resource. The resource manager 610, in turn, can provide the thread key key1 to an available DMA resource, e.g. RID1 622. Thus, the software thread 0 601 can have access to the chain of buffers 634-636.

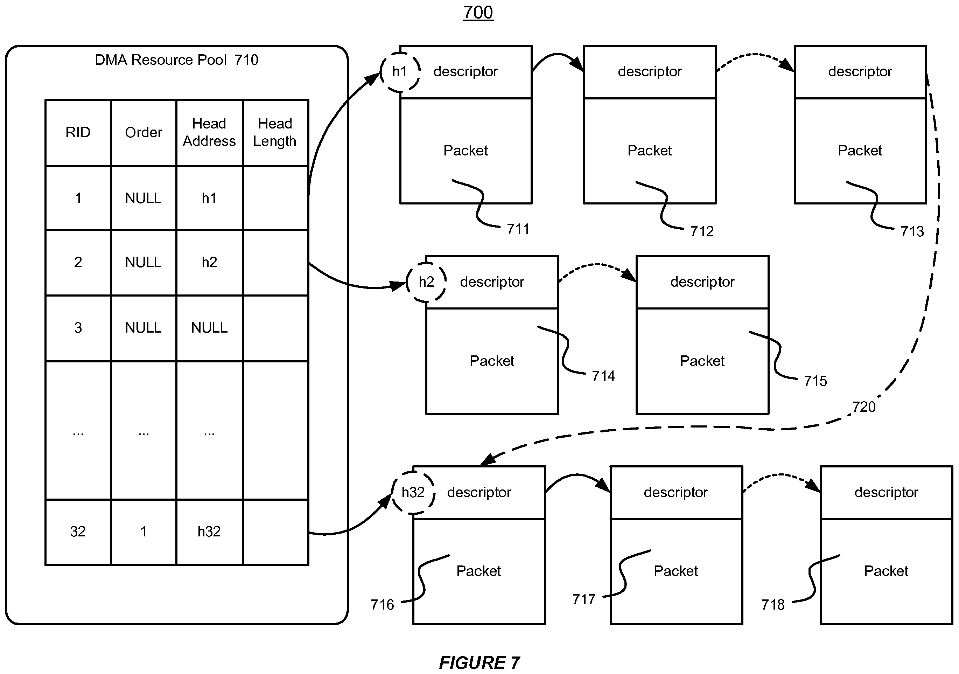

**Figure 7** shows an illustration of using one or more linked lists of buffers for packet processing in a networking device, in accordance with an embodiment of the invention. As shown in Figure 7, a free DMA resources pool 710 in a networking device 700 can maintain one or more DMA resources, each of which can be associated with several different properties, such as RID, Order, HeadAddr, and HeadLen. Here, the RID property can contain a resource number assigned to a buffer chain, and the Order property can indicate that a particular buffer chain is configured to be processed following another buffer chain.

As shown in Figure 7, the system can use a linked-list data structure to implement a buffer chain for holding various packets. For example, the DMA resource with a resource number 1 can point to a linked list of packet buffers, which starts at the packet buffer 711 with a head address h1. Here, the packet buffer 711 is collocated with a descriptor. Within the linked list, the packet buffer 711 can point to the next packet buffer 712 and the packet buffer 712 can point to the next packet buffer 713, (each of the packet buffer 712 and the packet buffer 713 is also collocates with a descriptor).

Additionally, the DMA resource with a resource number 2 can point to a linked list of packet buffers, which starts at a packet buffer 714 with a head address h2. Here, the packet buffer 714 is collocated with a descriptor and can point to another packet buffer 715.

Furthermore, the software thread accessing the DMA resource with a resource number 1 may make a request for accessing additional hardware resources. For example, the software thread can access the DMA resource with a resource number 32, which points to linked list of packet buffers that starts at a packet buffer 716 with a head address h32. Similarly, packet buffer 716 is collocated with a descriptor and can point to other packet buffers 717 and 718 in the linked list.

Also as shown in Figure 7, the system can force the hardware to process the packet buffers 711-713 before processing the packet buffers 716-718, by setting the Order value, for the DMA resource with a resource number 32, to 1 (as shown as an arrow 720 pointing from the packet buffer 713 to the packet buffer 716).

In accordance with an embodiment of the invention, using the scheme based on linked lists, the system can provide for a limited foot print in memory, which can be advantageous in the case of embedded systems. For example, the implementation of the linked list of packet buffers for the Linux environment can be straight forward, since the Linux implementation of packets is based on a linked list. Thus, the system can directly translate a linked list of packets in the Linux environment into a hardware linked list of packet buffers in the memory.

Furthermore, the implementation can be OS independent. For example, the system can be implemented on any general OS, custom OS, or embedded RTOS.

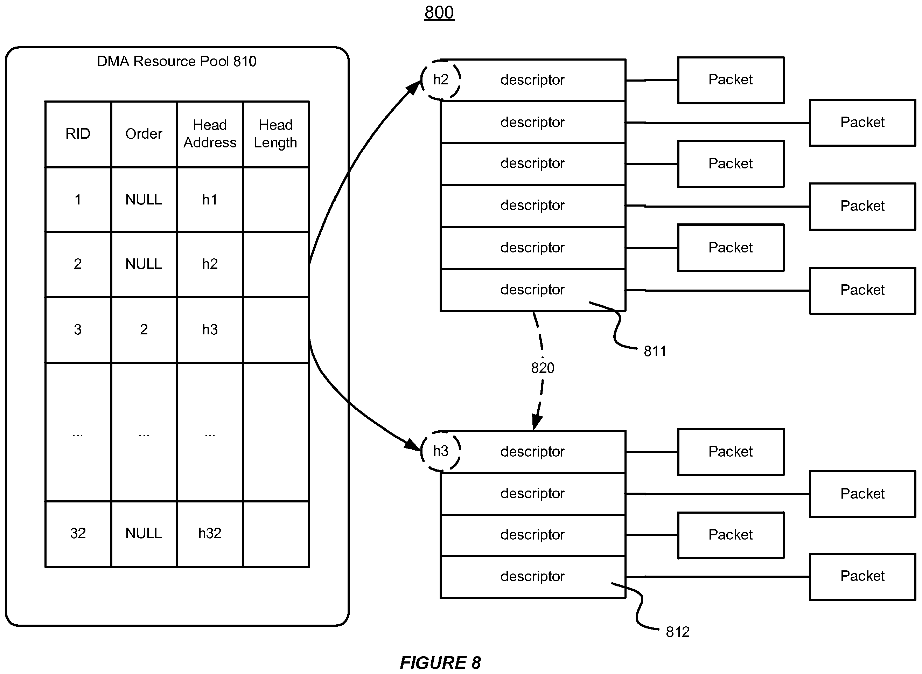

**Figure 8** shows an illustration of using one or more linear arrays for supporting packet processing in a networking device, in accordance with an embodiment of the invention. As shown in Figure 8, a free DMA resources pool 810 in a networking device 800 can maintain one or more DMA resources. Furthermore, each DMA resource can be associated with several different properties, such as RID, Order, HeadAddr, and HeadLen. Here, the RID property can contain a resource number assigned to a buffer chain, and the Order property can indicate that a particular buffer chain is configured to be processed following another buffer chain.

In accordance with an embodiment of the invention, the system can use a linear array of descriptors to implement a buffer chain for holding various packets. Furthermore, each descriptor in the linear array of descriptors can point to a separate packet buffer, and the system can reach each packet buffer from a different packet descriptor.

As shown in Figure 8, the DMA resource with a resource number 1 can point to a linear array of descriptors 811 with a head address h2. Also, the DMA resource with a resource number 2 can point to a linear array of descriptors 812 with a head address h3. Here, the linear array of descriptors 811-812 is not collocated with the packet buffers.

Additionally, the system allows the packet buffers to be processed accordingly to a pre-configured order. For example, the system can set the Order value, for the DMA resource with resource number 3, to 2, in order to force the hardware engine to process the packet buffers associated with the linear array of descriptors 811 before the packet buffers associated with the linear array of descriptors 812 (as shown as an arrow 820 pointing from the linear array of descriptors 811 to the linear array of descriptors 812).

In accordance with an embodiment of the invention, the system can deal with multiple packets in one shot without a need to deal with each packet separately in a sequence. Thus, using the linear array of descriptors, the system can provide low latency, which can be advantageous, e.g. as a cache efficient scheme.

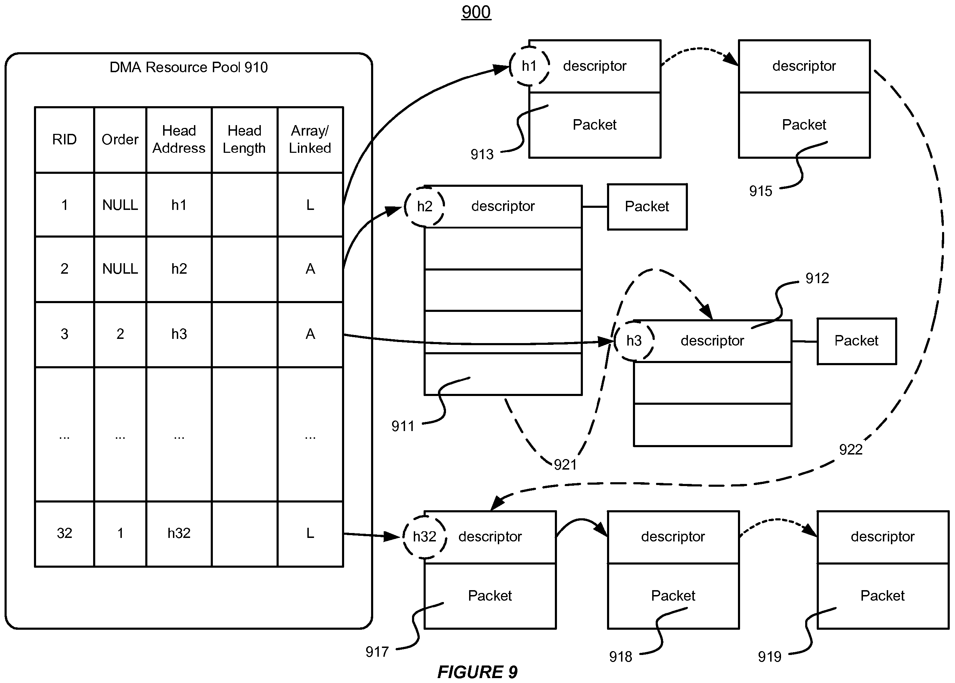

**Figure 9** shows an illustration of using a mix of linked lists and linear arrays to support flexible packet processing in a networking device, in accordance with an embodiment of the invention. As shown in Figure 9, a free DMA resources pool 910 in a networking device 900 can maintain one or more DMA resources. Furthermore, each DMA resource can be associated with several different properties, such as RID, Order, HeadAddr, HeadLen, and Array/Linked. Here, the RID property can contain a resource number assigned to a buffer chain, and the Order property can indicate that a particular buffer chain is configured to be processed following another buffer chain.

In accordance with an embodiment of the invention, the different DMA resources in the free pool 910 can be associated with different types of buffer chains.

For example, the DMA resource with a resource number 2 can point to a linear array of descriptors 911 with a head address h2, each of which can point to a packet. Similarly, the DMA resource with a resource number 32 can point to a linear array of descriptors 912 with a head address h2, each of which can point to a packet.

Additionally, the DMA resource associated with a resource number 1 can point to a linked list of packet buffers, which start at the packet buffer 913 with head address h1. Within the linked list data structure, the packet buffer 913, which collocates with a descriptor, can point to another packet buffer 915. Similarly, the DMA resource associated with a resource number 32 can point to a linked list of packet buffers, which start at the packet buffer 917 with head address h32. Also, the packet buffer 917, which collocates with a descriptor, can point to other packet buffers 918 and 919 in the linked list data structure.

Furthermore, the system allows the packet buffers to be processed according to a pre-configured order (as shown as an arrow 921 pointed from the linear array of descriptors 911 to the linear array of descriptors 912, and an arrow 922 pointing from the packet buffer 915 to the packet buffer 917).

In accordance with an embodiment of the invention, the system can dynamically determine which type of buffer chain can be allocated for a requesting software thread. Such a determination can be based on the balance of memory usage and latency requirements of the particular packet processing thread. For example, if a particular packet processing thread is more sensitive to memory usage, then the system can allocate a linked list based buffer chain. Otherwise, the system can allocate a linear array based buffer chain, when the particular packet processing thread is more sensitive to latency.

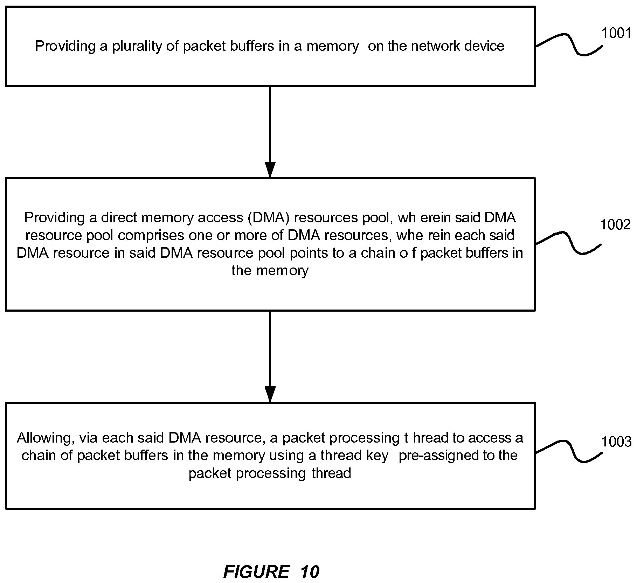

**Figure 10** illustrates an exemplary flow chart for supporting efficient buffer utilization for packet processing in a networking device, in accordance with an embodiment of the invention. As shown in Figure 10, at step 1001, the system can provide a plurality of packet buffers in a memory on the network device. Furthermore, at step 1002, the system can provide a direct memory access (DMA) resources pool, wherein said DMA resource pool comprises one or more of DMA resources, wherein each said DMA resource in said DMA resource pool points to a chain of packet buffers in the memory. Then, at step 1003, each said DMA resource allows a packet processing thread to access a chain of packet buffers in the memory using a thread key pre-assigned to the packet processing thread.

An embodiment of the invention comprises a system for supporting efficient packet processing in a network device, comprising: a plurality of packet buffers in a memory on the network device; a direct memory access (DMA) resources pool, wherein said DMA resource pool comprises one or more of DMA resources, wherein each said DMA resource in said DMA resource pool points to a chain of packet buffers in the memory; and wherein each said DMA resource allows a packet processing thread to access a chain of packet buffers in the memory using a thread key pre-assigned to the packet processing thread.

The system as provided above wherein said packet processing thread operates to access multiple chains of packet buffers in the memory using the same pre-assigned thread key.

The system as provided above wherein said packet processing thread operates to set a dependency list for processing packets in said multiple chains of packet buffers.

The system as provided above wherein multiple packet processing threads operate to access different chains of packet buffers in the memory concurrently.

The system as provided above wherein at least one DMA resource points to a linked list of packet buffers.

The system as provided above wherein each packet buffer in the linked list collocates with a descriptor.

The system as provided above wherein at least one DMA resource points to a linear array of descriptors.

The system as provided above wherein each descriptor in a linear array of descriptors points to a packet buffer.

The system as provided above wherein the plurality of packet buffers are organized based on a mix of linked lists and linear arrays.

The system as provided above wherein said DMA resources pool operates to dynamically determine whether a packet processing thread should access a chain of buffer based on a linked list or based on a linear array.

An embodiment of the invention comprises a method for supporting efficient packet processing in a network environment, comprising: providing a plurality of packet buffers in a memory on the network device; providing a direct memory access (DMA) resources pool, wherein said DMA resource pool comprises one or more of DMA resources, wherein each said DMA resource in said DMA resource pool points to a chain of packet buffers in the memory; and allowing, via each said DMA resource, a packet processing thread to access a chain of packet buffers in the memory using a thread key pre-assigned to the packet processing thread.

The method as provided above further comprising allowing said packet processing thread to access multiple chains of packet buffers in the memory using the same pre-assigned thread key.

The method as provided above further comprising allowing said packet processing thread to set a dependency list for processing packets in said multiple chains of packet buffers.

The method as provided above further comprising allowing multiple packet processing threads to access different chains of packet buffers in the memory concurrently.

The method as provided above further comprising allowing at least one DMA resource to point to a linked list of packet buffers.

The method as provided above further comprising allowing each packet buffer in the linked list to collocate with a descriptor.

The method as provided above further comprising allowing at least one DMA resource to point to a linear array of descriptors.

The method as provided above further comprising allowing each descriptor in a linear array of descriptors to point to a packet buffer.

The method as provided above further comprising organizing the plurality of packet buffers based on a mix of linked lists and linear arrays, and dynamically determining whether a packet processing thread should access a chain of buffer based on a linked list or based on a linear array.

An embodiment of the invention comprises a non-transitory machine readable storage medium having instructions stored thereon that when executed cause a system to perform the steps comprising: providing a plurality of packet buffers in a memory on the network device; providing a direct memory access (DMA) resources pool, wherein said DMA resource pool comprises one or more of DMA resources, wherein each said DMA resource in said DMA resource pool points to a chain of packet buffers in the memory; and allowing, via each said DMA resource, a packet processing thread to access a chain of packet buffers in the memory using a thread key pre-assigned to the packet processing thread.

Many features of the present invention can be performed in, using, or with the assistance of hardware, software, firmware, or combinations thereof. Consequently, features of the present invention may be implemented using a processing system (e.g., including one or more processors).

Features of the present invention can be implemented in, using, or with the assistance of a computer program product which is a storage medium (media) or computer readable medium (media) having instructions stored thereon/in which can be used to program a processing system to perform any of the features presented herein. The storage medium can include, but is not limited to, any type of disk including floppy disks, optical discs, DVD, CD-ROMs, microdrive, and magneto-optical disks, ROMs, RAMs, EPROMs, EEPROMs, DRAMs, VRAMs, flash memory devices, magnetic or optical cards, nanosystems (including molecular memory ICs), or any type of media or device suitable for storing instructions and/or data.

Stored on any one of the machine readable medium (media), features of the present invention can be incorporated in software and/or firmware for controlling the hardware of a processing system, and for enabling a processing system to interact with other mechanism utilizing the results of the present invention. Such software or firmware may include, but is not limited to, application code, device drivers, operating systems and execution environments/containers.

Features of the invention may also be implemented in hardware using, for example, hardware components such as application specific integrated circuits (ASICs). Implementation of the hardware state machine so as to perform the functions described herein will be apparent to persons skilled in the relevant art.

Additionally, the present invention may be conveniently implemented using one or more conventional general purpose or specialized digital computer, computing device, machine, or microprocessor, including one or more processors, memory and/or computer readable storage media programmed according to the teachings of the present disclosure. Appropriate software coding can readily be prepared by skilled programmers based on the teachings of the present disclosure, as will be apparent to those skilled in the software art.

While various embodiments of the present invention have been described above, it should be understood that they have been presented by way of example, and not limitation. It will be apparent to persons skilled in the relevant art that various changes in form and detail can be made therein without departing from the scope of the invention.
The present invention has been described above with the aid of functional building blocks illustrating the performance of specified functions and relationships thereof. The boundaries of these functional building blocks have often been arbitrarily defined herein for the convenience of the description. Alternate boundaries can be defined so long as the specified functions and relationships thereof are appropriately performed. Any such alternate boundaries are thus within the scope of the invention.

The foregoing description of the present invention has been provided for the purposes of illustration and description. It is not intended to be exhaustive or to limit the invention to the precise forms disclosed. The breadth and scope of the present invention should not be limited by any of the above-described exemplary embodiments. Many modifications and variations will be apparent to the practitioner skilled in the art. The modifications and variations include any relevant combination of the disclosed features. The embodiments were chosen and described in order to best explain the principles of the invention and its practical application, thereby enabling others skilled in the art to understand the invention for various embodiments and with various modifications that are suited to the particular use contemplated. It is intended that the scope of the invention be defined by the following claims.

## Claims

1. A system for supporting efficient packet processing in a network environment, comprising:
one or more microprocessors;
a plurality of direct memory access, DMA, engines (220) for processing packets in the network environment;
a pool (320) of DMA resources (321-323) associated with the plurality of DMA engines;
a thread scheduling engine (310), running on the one or more microprocessors;
a plurality of software threads (301-309), wherein said thread scheduling engine operates to assign a thread key (311-313) to each software thread in the plurality of software threads;
a resource manager (330) which allocates an available DMA resource from said pool of DMA resources to said each software thread; and
wherein said each software thread operates to request access to the DMA resource in the pool of DMA resources allocated to said each software thread by presenting the thread key assigned to said each software thread.

2. The system according to Claim 1, wherein:
the packets are control packets that are generated by a virtual fabric.

3. The system according to Claim 1 or 2, wherein:
the DMA resources are assigned depending on at least one of: a latency requirement and a data rate that each said DMA engine needs to be sustaining.

4. The system according to any preceding Claim wherein:
said thread scheduling engine is a thread scheduler built based on an operating system, OS.

5. The system according to any preceding Claim, wherein at least one of:
if another software thread has already been assigned to the DMA resource, then an access to the DMA resource is denied;
if all DMA resources are in use, a software thread which requests allocation of a DMA resource is put to wait.

6. The system according to any preceding Claim, wherein:
a single software thread is allowed to access multiple DMA resources.

7. The system according to Claim 6, wherein:
the single software thread operates to determine the ordering among the multiple DMA resources.

8. A method for supporting efficient packet processing in a network environment, comprising:
providing a plurality of direct memory access, DMA, engines (220) for processing packets in the network environment;
providing a pool (320) of DMA resources (321-323) associated with the plurality of DMA engines;
providing a thread scheduling engine, running on one or more microprocessors;
assigning a thread key to each software thread in a plurality of software threads using the thread scheduling engine;
allocating an available DMA resource from said pool of DMA resources to said each software thread using a resource manager; and
allowing said each software thread to request access to the DMA resource allocated to said each software in the pool of DMA resources by presenting the thread key assigned to said each software thread.

9. The method according to Claim 8, wherein
the packets are control packets that are generated by a virtual fabric.

10. The method according to Claim 8 or 9, further comprising:
assigning the DMA resources depending on a data rate that each said DMA engine needs to be sustaining.

11. The method according to any of Claims 8 to 10,
wherein said thread scheduling engine is a thread scheduler built based on an operating system, OS.

12. The method according to any of Claims 8 to 11, further comprising at least one of:
denying an access to the DMA resource if another software thread has already been assigned to the DMA resource;
putting a requesting software thread to wait if all DMA resources are in use.

13. The method according to any of Claims 8 to 12, further comprising:
allowing a single software thread to access multiple DMA resources, and
determining the ordering among the multiple DMA resources.

14. A computer program product comprising machine-readable program instructions that when executed by a computer system cause the computer system to perform the method of any of claims 8 to 13.

15. The computer program product of Claim 14, comprising a computer readable storage medium containing the program instructions.

## Patentansprüche

1. System zum Unterstützen der effizienten Paketverarbeitung in einer Netzwerkumgebung, umfassend:
einen oder mehrere Mikroprozessoren;
eine Vielzahl von Direktspeicherzugriff- bzw. DMA-Engines (220) zum Verarbeiten von Paketen in der Netzwerkumgebung;
eine Zusammenstellung (320) von DMA-Betriebsmitteln (321-323), assoziiert mit der Vielzahl von DMA-Engines;
eine Thread-Terminierungsengine (310), die in dem einen oder den mehreren Mikroprozessoren ausgeführt wird;
eine Vielzahl von Software-Threads (301-309), wobei die Thread-Terminierungsengine arbeitet, jedem Software-Thread in der Vielzahl von Software-Threads einen Thread-Schlüssel (311-313) zuzuweisen;
einen Betriebsmittelmanager (330), der jedem Software-Thread ein verfügbares DMA-Betriebsmittel aus der Zusammenstellung von DMA-Betriebsmitteln zuteilt; und
wobei jeder Software-Thread arbeitet, Zugriff auf das DMA-Betriebsmittel in der Zusammenstellung von DMA-Betriebsmitteln, das jedem Software-Thread zugeteilt ist, durch Präsentieren des jedem Software-Thread zugewiesenen Thread-Schlüssels anzufordern.

2. System nach Anspruch 1, wobei:
die Pakete Steuerpakete sind, die durch ein virtuelles Gefüge erzeugt werden.

3. System nach Anspruch 1 oder 2, wobei:
die DMA-Betriebsmittel abhängig von mindestens einem von Folgendem zugewiesen werden: ein Latenzerfordernis und eine Datenrate, die jede DMA-Engine aufrechterhalten muss.

4. System nach einem der vorstehenden Ansprüche, wobei:
die Thread-Terminierungsengine eine basierend auf einem Betriebssystem, OS, errichtete Thread-Terminierungsvorrichtung ist.

5. System nach einem der vorstehenden Ansprüche, wobei mindestens eines von Folgendem zutrifft:
wenn ein anderer Software-Thread bereits dem DMA-Betriebsmittel zugewiesen wurde, wird ein Zugriff auf das DMA-Betriebsmittel verweigert;
wenn alle DMA-Betriebsmittel in Verwendung sind, wird ein Software-Thread, der Zuteilung eines DMA-Betriebsmittels anfordert, in einen Wartezustand versetzt.

6. System nach einem der vorstehenden Ansprüche, wobei:
einem einzelnen Software-Thread gestattet wird, auf mehrere DMA-Betriebsmittel zuzugreifen.

7. System nach Anspruch 6, wobei:
der einzelne Software-Thread arbeitet, um die Ordnung unter den mehreren DMA-Betriebsmitteln zu bestimmen.

8. Verfahren zum Unterstützen der effizienten Paketverarbeitung in einer Netzwerkumgebung, umfassend:
Bereitstellen einer Vielzahl von Direktspeicherzugriff- bzw. DMA-Engines (220) zum Verarbeiten von Paketen in der Netzwerkumgebung;
Bereitstellen einer Zusammenstellung (320) von DMA-Betriebsmitteln (321-323), assoziiert mit der Vielzahl von DMA-Engines;
Bereitstellen einer Thread-Terminierungsengine, die in dem einen oder den mehreren Mikroprozessoren ausgeführt wird;
Zuweisen eines Thread-Schlüssels jedem Software-Thread in einer Vielzahl von Software-Threads unter Verwendung der Thread-Terminierungsengine;
Zuteilen eines verfügbaren DMA-Betriebsmittels aus der Zusammenstellung von DMA-Betriebsmitteln jedem Software-Thread unter Verwendung eines Betriebsmittelmanagers; und
Gestatten jedem Software-Thread, Zugriff auf das DMA-Betriebsmittel, das jeder Software in der Zusammenstellung von DMA-Betriebsmitteln zugeteilt ist, durch Präsentieren des jedem Software-Thread zugewiesenen Thread-Schlüssels anzufordern.

9. Verfahren nach Anspruch 8, wobei
die Pakete Steuerpakete sind, die durch ein virtuelles Gefüge erzeugt werden.

10. Verfahren nach Anspruch 8 oder 9, ferner umfassend:
Zuweisen der DMA-Betriebsmittel abhängig von einer Datenrate, die jede DMA-Engine aufrechterhalten muss.

11. Verfahren nach einem der Ansprüche 8 bis 10,
wobei die Thread-Terminierungsengine eine basierend auf einem Betriebssystem, OS, errichtete Thread-Terminierungsvorrichtung ist.

12. Verfahren nach einem der Ansprüche 8 bis 11, ferner mindestens eines von Folgendem umfassend:
Verweigern eines Zugriffs auf das DMA-Betriebsmittel, wenn ein anderer Software-Thread bereits dem DMA-Betriebsmittel zugewiesen wurde;
Versetzen eines anfordernden Software-Threads in einen Wartezustand, wenn alle DMA-Betriebsmittel in Verwendung sind.

13. Verfahren nach einem der Ansprüche 8 bis 12, ferner umfassend:
Gestatten eines einzelnen Software-Threads, auf mehrere DMA-Betriebsmittel zuzugreifen, und
Bestimmen der Ordnung unter den mehreren DMA-Betriebsmitteln.

14. Computerprogrammprodukt, umfassend maschinenlesbare Programmanweisungen, die, wenn sie durch ein Computersystem ausgeführt werden, bewirken, dass das Computersystem das Verfahren nach einem der Ansprüche 8 bis 13 durchführt.

15. Computerprogrammprodukt nach Anspruch 14, umfassend ein computerlesbares Speichermedium, das die Programmanweisungen enthält.

## Revendications

1. Système de prise en charge d'un traitement de paquets efficace dans un environnement de réseau, comprenant :
un ou plusieurs microprocesseurs ;
une pluralité de moteurs d'accès direct à la mémoire, DMA, (220) pour traiter des paquets dans l'environnement de réseau ;
un poule (320) de ressource DMA (321 à 323) associé à la pluralité de moteurs DMA ;
un moteur d'ordonnancement de fils d'exécution (310), tournant sur les un ou plusieurs microprocesseurs ;
une pluralité de fils d'exécution logiciels (301 à 309), dans lequel ledit moteur d'ordonnancement de fils d'exécution fonctionne pour assigner une clé de fil d'exécution (311 à 313) à chaque fil d'exécution logiciel dans la pluralité de fils d'exécution logiciels ;
un gestionnaire de ressources (330) qui alloue une ressource DMA disponible dudit poule de ressources DMA à chaque dit fil d'exécution logiciel ; et
dans lequel chaque dit fil d'exécution logiciel fonctionne pour demander l'accès à la ressource DMA dans le pool de ressources DMA alloué à chaque dit fil d'exécution logiciel en présentant la clé de fil d'exécution assignée à chaque dit fil d'exécution logiciel.

2. Système selon la revendication 1, dans lequel :
les paquets sont des paquets de commande qui sont générés par une structure virtuelle.

3. Système selon la revendication 1 ou 2, dans lequel
les ressources DMA sont assignées en fonction d'au moins un : d'une exigence de temps d'attente et d'un débit de données que doit soutenir chaque dit moteur DMA.

4. Système selon n'importe quelle revendication précédente dans lequel :
ledit moteur d'ordonnancement de fils d'exécution est un ordonnanceur de fils d'exécution construit sur la base d'un système d'exploitation, OS.

5. Système selon n'importe quelle revendication précédente, comprenant au moins un :
si un autre fil d'exécution logiciel a déjà été assigné à la ressource DMA, d'un refus de l'accès à la ressource DMA ;
si toutes les ressources DMA sont utilisées, d'une mise en attente d'un fil d'exécution logiciel qui demande l'allocation d'une ressource DMA.

6. Système selon n'importe quelle revendication précédente dans lequel :
un seul fil d'exécution logiciel est autorisé à solliciter de multiples sources DMA.

7. Système selon la revendication 6 dans lequel :
le fils d'exécution logiciel unique fonctionne pour déterminer l'ordre parmi les multiples ressources DMA.

8. Procédé de prise en charge d'un traitement de paquets efficace dans un environnement de réseau, comprenant :
la fourniture d'une pluralité de moteurs d'accès direct à la mémoire, DMA, (220) pour traiter des paquets dans l'environnement de réseau ;
la fourniture d'un poule (320) de ressource DMA (321 à 323) associé à la pluralité de moteurs DMA ;
la fourniture d'un moteur d'ordonnancement de fils d'exécution, tournant sur un ou plusieurs microprocesseurs ;
l'assignation d'une clé de fil d'exécution à chaque fil d'exécution logiciel dans une pluralité de fils d'exécution logiciels à l'aide du moteur d'ordonnancement de fils d'exécution ;
l'allocation d'une ressource DMA disponible dudit poule de ressources DMA à chaque dit fil d'exécution logiciel à l'aide d'un gestionnaire de ressources ; et
l'autorisation à chaque dit fil d'exécution logiciel de demander l'accès à la ressource DMA allouée à chaque dit logiciel dans le pool de ressources DMA en présentant la clé de fil d'exécution assignée à chaque dit fil d'exécution logiciel.

9. Procédé selon la revendication 8, dans lequel :
les paquets sont des paquets de commande qui sont générés par une structure virtuelle.

10. Procédé selon la revendication 8 ou 9, comprenant en outre :
l'assignation des ressources DMA en fonction d'un débit de données que doit soutenir chaque dit moteur DMA.

11. Procédé selon l'une quelconque des revendications 8 à 10 dans lequel :
ledit moteur d'ordonnancement de fils d'exécution est un ordonnanceur de fils d'exécution construit sur la base d'un système d'exploitation, OS.

12. Procédé selon l'une quelconque des revendications 8 à 11, comprenant au moins un :
d'un refus de l'accès à la ressource DMA si un autre fil d'exécution logiciel a déjà été assigné à la ressource DMA ;
d'une mise en attente d'un fil d'exécution logiciel demandeur si toutes les ressources DMA sont utilisées.

13. Procédé selon l'une quelconque des revendications 8 à 12, comprenant en outre :
l'autorisation à un seul fil d'exécution logiciel de solliciter de multiples sources DMA, et
la détermination de l'ordre parmi les multiples ressources DMA.

14. Produit-programme informatique comprenant des instructions de programme lisibles par machine qui, à leur exécution par un système informatique, amènent le système informatique à réaliser le procédé selon l'une quelconque des revendications 8 à 13.

15. Produit-programme informatique selon la revendication 14, comprenant un support de mémorisation lisible par ordinateur contenant les instructions de programme.
